# FASCICULE DE BREVET EUROPEEN

(11) **EP 0 808 503 B1**
(45) Date de publication et mention de la délivrance du brevet: **09.09.1998**
(21) Numéro de dépôt: 96901862.1
(22) Date de dépôt: 26.01.1996
(51) Int. Cl.: G21C 3/07

(54) **TUBE EN ALLIAGE A BASE DE ZIRCONIUM POUR ASSEMBLAGE COMBUSTIBLE DE REACTEUR NUCLEAIRE ET PROCEDE DE FABRICATION D'UN TEL TUBE**
HÜLLROHR AUS ZIRKONIUMLEGIERUNG FÜR KERNREAKTORBRENNSTABBÜNDEL UND SEIN HERSTELLUNGSVERFAHREN
ZIRCONIUM ALLOY TUBE FOR A NUCLEAR REACTOR FUEL ASSEMBLY, AND METHOD FOR MAKING SAME

(30) Priorité: 30.01.1995 FR 9501025
(43) Date de publication de la demande: 26.11.1997
(73) Titulaire: FRAMATOME, 92400 Courbevoie (FR); COMPAGNIE GENERALE DES MATIERES NUCLEAIRES, F-78140 Velizy Villacoublay (FR)
(72) Inventeur: MARDON, Jean-Paul, F-69300 Caluire (FR); SEVENAT, Jean, F-44250 Saint-Brevin-les-Pins (FR); CHARQUET, Daniel, F-73400 Ugine Cédex (FR)
(74) Mandataire: Fort, Jacques
(86) Numéro de dépôt international: FR9600137
(87) Numéro de publication internationale: WO9624140

(56) Documents cités:
- EP-A- 0 085 553
- EP-A- 0 212 351
- EP-A- 0 622 470
- DE-A- 3 805 124
- US-A- 3 150 972
- US-A- 5 278 882

## Description

La présente invention concerne les tubes en alliage à base de zirconium destinés à être utilisés dans les assemblages combustibles pour réacteur nucléaire. De tels tubes sont en particulier utilisables pour constituer des gaines de crayon de combustible, la partie externe de telles gaines, ou même des tubes guides destinés à recevoir des crayons appartenant à des grappes de commande.

On utilise fréquemment, pour constituer de telles gaines, des tubes en alliage dit "Zircaloy 4", contenant, en plus du zirconium, 1,2 à 1,7% en poids d'étain, 0,18 à 0,24% en poids de fer, 0,07 à 0,13% en poids de chrome et 0,10 à 0,16% en poids d'oxygène. On a également proposé de nombreux alliages dérivés des précédents et notamment des alliages dans lesquels le chrome est remplacé, en tout ou partie, par du vanadium et/ou dans lesquels la teneur en oxygène dépasse celle donnée ci-dessus avec, corrélativement, une diminution de la teneur en certains autres éléments d'addition.

Les qualités requises pour un tube utilisé comme gaine sont notamment une bonne résistance à la corrosion par l'eau sous haute pression et à haute température, un fluage à long terme limité, une conservation des caractéristiques mécaniques à long terme, un grandissement sous irradiation limité et une sensibilité au lithium réduite; ces propriétés doivent par ailleurs être obtenues de façon constante et l'alliage utilisé doit avoir des propriétés métallurgiques aux divers stades d'élaboration (laminabilité notamment) réduisant le taux de rebut à une valeur acceptable.

La tenue sous irradiation des Zircaloy constitue un facteur qui gêne l'évolution des conditions d'exploitation des réacteurs nucléaires dans le sens d'une durée de cycle plus longue. C'est notamment le cas de la corrosion uniforme.

L'invention vise notamment à fournir un tube présentant des caractéristiques améliorées, pouvant être à l'état recristallisé lorsqu'on recherche par dessus tout un bon comportement en fluage ou à l'état métallurgiquement détendu, qui est économiquement plus facile à fabriquer dans des tolérances dimensionnelles strictes (notamment en matière d'ovalisation), et est plus favorable au regard de la corrosion généralisée.

Dans ce but, il est proposé un tube en alliage à base de zirconium contenant, en poids, 1 à 1,7 % d'étain, 0,55 à 0,8 % de fer, 0,20 % à 0,60 % en tout d'au moins un élément parmi le chrome et le vanadium, et 0,10 à 0,18 % d'oxygène, les teneurs en carbone et en silicium étant contrôlées et étant comprises respectivement entre 50 et 200 ppm et entre 50 et 120 ppm, l'alliage ne contenant de plus que du zirconium et des impuretés inévitables. Le tube, dans son état définitif, est soit détendu, soit recristallisé suivant les propriétés à privilégier.

Le vanadium est essentiellement présent dans des précipités fins sous la forme Zr(Fe,V)₂ ; il en va de même du chrome, qui est présent dans les précipités, sous la forme Zr(Fe,Cr)₂.

Un rapport Fe/(V+Cr) élevé, pouvant dépasser 3/1, permet d'améliorer encore la tenue à la corrosion dans un milieu contenant du lithium. En règle générale, ce rapport sera voisin de 2/1. Il sera en général préférable d'utiliser soit le chrome seul, soit le vanadium seul, plutôt que les deux en association.

Le choix d'une composition précise dans la plage ci-dessus dépendra des propriétés que l'on souhaite favoriser en priorité. Souvent un alliage à 1,3 % Sn, 0,60 % Fe, 0,25 % V ou Cr, 0,14% O₂, 140 ppm C et 90 ppm Si constituera un bon compromis.

La présence de vanadium réduit la fraction d'hydrogène absorbé et améliore la tenue à la corrosion en milieu aqueux à haute température et haute pression, même en cas ébullition localisée.

Si un impératif est de réduire le plus possible le fluage au cours de la phase initiale de l'utilisation en réacteur, il pourra être avantageux d'avoir une teneur élevée en étain, en carbone et/ou en oxygène. Une teneur en carbone supérieure à 100 ppm, est favorable du point de vue du fluage ; mais au-delà de 200 ppm, le phénomène de grandissement sous irradiation devient important. La teneur en silicium est "contrôlée" pour tirer partie de son effet de régulation des structures et de son influence favorable sur le comportement à la corrosion.

Une valeur élevée de la somme des éléments bétagènes (Fe+V+Cr) contribue à l'affinement du grain de la structure métallurgique, qui est un facteur de la bonne tenue à la corrosion sous contrainte, de la ductilité après irradiation, des propriétés mécaniques et de la mise en forme. Cette somme sera souvent d'au moins 0,70%.

L'invention propose également un procédé de fabrication de tube en un alliage du type défini ci-dessus, comprenant successivement : la coulée d'un lingot, et le forgeage à l'état de barre pleine ; la trempe à l'eau de la barre après chauffage, généralement par induction, en phase β ; un recuit éventuel en phase α entre 640°C et 760°C (avantageusement vers 730°C) ; un filage d'une billette percée en ébauche tubulaire ; un recuit éventuel en phase α entre 600° C et 750° C (avantageusement vers 650°C) ; des laminages successifs à froid sous forme de tubes d'épaisseur décroissante, avec recuits intermédiaires sous atmosphère inerte ou sous vide à une température comprise entre 640°C et 760°C, avantageusement vers 730°C pour les deux premiers et 700°C pour les suivants ; et un recuit final en atmosphère inerte ou sous vide qui est entre 450°C et 500°C (avantageusement vers 485°C), si on recherche une structure de détente, entre 565° C et 630°C (avantageusement vers 580° C) si on recherche un état recristallisé. L'ensemble des traitements thermiques est avantageusement tel que le paramètre de traitement thermique ∑A soit compris entre 10⁻¹⁸ et 10⁻¹⁶, ∑A étant égal au produit du temps t en heures par exp(- 40 000/T), T étant en Kelvin.

Le premier recuit, après trempe, est avantageusement vers 730° C ; le second, après filage, est avantageusement vers 650° C.

Le tube ainsi réalisé ne subit plus de traitement thermique modifiant sa structure métallurgique jusqu'au moment où il est utilisé comme tube de gainage ou tube-guide. En revanche, il reçoit encore des traitements de surface, et il est soumis à un examen. Le traitement de surface peut notamment comporter un sablage et un décapage chimique, suivi d'un rinçage. Le traitement de surface peut être complété par un polissage à l'aide d'une roue. Le contrôle est effectué de façon classique visuellement, par ultra-sons, et/ou par courant de Foucault.

D'autres caractéristiques apparaîtront mieux à la lecture de la description de modes particuliers d'exécution.

Des compositions intéressantes se sont révélées les suivantes :

| **COMPOSITIONS** | | | |
|---|---|---|---|
| | **I** | **II** | **III** |
| Etain | 1,3 | 1,3 | 1,3 |
| Fer | 0,6 | 0,6 | 0,6 |
| Vanadium | 0,3 | 0,25 | 0 |
| Chrome | 0 | 0 | 0,25 |
| Oxygène | 0,12 | 0,14 | 0,14 |
| Carbone | 140 | 140 | 140 |
| Silicium | 90 | 90 | 90 |

les autres composants étant le zirconium et les impuretés.

L'alliage de départ se présente sous forme d'un lingot. Par forgeage ou laminage, il est mis sous forme d'une barre qui, après chauffage en phase β, est trempée à l'eau à vitesse contrôlée pour l'amener dans le domaine α, par exemple avec une vitesse de refroidissement comprise entre 5°C par seconde et 30°C par seconde jusqu'à moins de 800°C environ. Le recuit après trempe est réalisé à une température inférieure à 800°C pour éviter la transformation de phase α en phase β. Après usinage d'une billette tubulaire, et chauffage entre 600 et 750°C, le filage est effectué. L'ébauche filée, après avoir subi éventuellement un recuit à une température inférieure à 800° C, subit ensuite le nombre de laminages successifs à froid requis pour amener le tube à l'épaisseur requise, avec des recuits intermédiaires sous argon, chacun pendant une à trois heures, permettant d'arriver à un ∑A convenable. Pratiquement quatre ou cinq laminages seront généralement effectués pour constituer des tubes de gainage massifs de diamètre et d'épaisseur courants. Enfin, un recuit final est effectué en atmosphère inerte, vers 485°C, pendant une à trois heures, si on recherche une structure de détente ou vers 580° C, pendant environ 2 heures, si on recherche un état recristallisé.

Des essais ont été effectués sur des échantillons pour comparer des alliages conformes à l'invention à différentes teneurs en étain à des alliages de type Zircaloy-4.

### Corrosion généralisée

Des essais sur des échantillons à l'état recristallisé ont été effectués en autoclave, dans l'eau et la vapeur. Les résultats sont donnés dans le tableau I ci-dessous.

**TABLEAU 1**

| **ALLIAGE** | | **Prise de poids Δ P (mg/dm**^{**2**}**)** | |
|---|---|---|---|
| | | **Eau 350° C - 210 jours** | **Vapeur 400° C - 30 jours** |
| 1 | Zr 0,6 Fe;0,3V | 29,2 | 26,4 - 38,5 |
| 2 | Zr 0,6 Fe;0,3V; 0,5Sn | 31 | 27,5 |
| 3 | Zr 0,6 Fe, 0,3 V;1,0Sn | 32,2 | 30,4 |
| 4 | Zr0,6 Fe;0,3V;1,5Sn (invention) | 32 | 30,9 |
| 5 | Zircaloy 4 | 43,9 - 47,2 | 32 |

Les résultats obtenus, en particulier pour l'alliage 4 qui est conforme à l'invention, montrent que l'augmentation de la teneur en étain de 0 à 1,5 % est sans effet sur la résistance à la corrosion généralisée dans l'eau et la vapeur.

### Corrosion en milieu lithium et résistance au fluage

L'influence de la teneur en étain sur la tenue à la corrosion d'alliages de type Zircaloy 4 dans un milieu contenant de la lithine, a été étudiée dans l'eau à 70 ppm de lithium à 360° C. Les résultats sont donnés dans le tableau 2.

**TABLEAU 2**

| **% Sn dans l'alliage** | **Prise de poids Δ P mg/dm**^{**2**} | | |
|---|---|---|---|
| | **50 jours** | **100 jours** | **150 jours** |
| 1,5 | 48 | 78 | 112 |
| 1,3 | 51 | 85 | 148 |
| 0,5 | 35 | 72 | 740 |

L'influence très favorable de la teneur en étain élevée (entre 1,2 et 1,5 %) sur la tenue à la corrosion en milieu lithine se retrouve dans le cas d'alliages suivant l'invention.

Une teneur élevée en étain s'est également révélée favorable sur le comportement en fluage de cet alliage. En effet, les mesures de fluage diamétral ε_{D} à 400° C pendant 240 h sous une pression de 130 MPa ont donné les valeurs suivantes, pour un alliage détendu :

| **TENEUR EN Sn (%)** | **ε**_{**D**} **(%)** |
|---|---|
| 1,5 (invention) | 1,5 |
| 1,3 (invention) | 2 |
| 0,5 | 4,2 |

Les résultats obtenus montrent une relation quasi-linéaire entre la teneur en Sn et les caractéristiques en fluage.

## Revendications

1. Tube en alliage à base de zirconium destiné à constituer tout ou partie d'une gaine ou un tube guide d'assemblage combustible nucléaire, caractérisé en ce que l'alliage contient, en poids, 1,0 à 1,7 % d'étain, 0,55 à 0,8 % de fer, 0,20 à 0,60 % au total d'au moins un des éléments chrome et vanadium et 0,10 à 0,18 % d'oxygène, les teneurs en carbone et en silicium étant respectivement entre 50 et 200 ppm et entre 50 et 120 ppm, l'alliage ne contenant, de plus, que du zirconium et des impuretés inévitables.

2. Tube selon la revendication 1, caractérisé en ce que l'alliage est complètement recristallisé.

3. Tube selon la revendication 1, caractérisé en ce que l'alliage est à l'état complètement détendu.

4. Tube selon la revendication 1, 2 ou 3, caractérisé en ce que l'alliage contient environ 1,3 % d'étain, 0,60 % de fer, 0,25 % de vanadium ou chrome, 0,14 % d'oxygène, 140 ppm de carbone et 90 ppm de silicium.

5. Tube selon l'une quelconque des revendications 1 à 4, caractérisé en ce que le rapport Fe/V est voisin de 2/1, l'alliage étant pratiquement sans chrome.

6. Tube selon l'une quelconque des revendications 1 à 4, caractérisé en ce que le rapport Fe/Cr est voisin de 2/1, l'alliage étant pratiquement sans vanadium.

7. Tube selon l'une quelconque des revendications 1 à 6, caractérisé en ce que la somme des teneurs en fer d'une part, vanadium ou chrome d'autre part, dépasse 0,7 %.

8. Procédé de fabrication de tube suivant l'une quelconque des revendications 1 à 7, caractérisé en ce qu'il comprend successivement : la coulée d'un lingot et le forgeage à l'état de barre pleine ; la trempe de la barre prélablement chauffée en phase β ; un recuit éventuel en phase α entre 640° C et 760° C ; un filage, d'une billette percée, en ébauche tubulaire ; un recuit éventuel en phase α entre 600°C et 750°C ; des laminages successifs à froid sous forme de tubes d'épaisseur décroissante, avec traitements thermiques intermédiaires sous atmosphère inerte ou sous vide à une température comprise entre 640 et 760°C, avantageusement vers 730°C pour les deux premiers et 700°C pour les suivants et un recuit final en atmosphère inerte ou sous vide.

9. Procédé selon la revendication 8, caractérisé en ce que le recuit final est un recuit de détente entre 450° C et 500° C.

10. Procédé selon la revendication 8, caractérisé en ce que le recuit final est un recuit de recristallisation entre 565° C et 630° C.

11. Procédé selon l'une quelconque des revendications 8 à 10, caractérisé en ce que l'ensemble des traitements thermiques est tel que le paramètre de traitement thermique ∑A soit compris entre 10⁻¹⁸ et 10⁻¹⁶.

12. Procédé selon la revendication 8, 9 ou 10, caractérisé en ce que le premier recuit est effectué vers 730°C.

13. Procédé selon la revendication 12, caractérisé en ce que le second recuit après filage est effectué vers 650°C.

## Patentansprüche

1. Rohr aus einer Legierung auf der Basis von Zirkonium, das dazu dient, den gesamten Abschnitt oder einen Teil einer Hülle oder ein Führungsrohr eines Kernbrennstabbündels zu bilden, dadurch gekennzeichnet, daß die Legierung in Gewichtsprozent 1,0 bis 1,7% Zinn, 0,55 bis 0,8% Eisen, 0,20 bis 0,60% insgesamt wenigstens eines der Elemente Chrom und Vanadium und 0,10 bis 0,18% Sauerstoff enthält, wobei die Gehalte an Kohlenstoff und Silicium zwischen 50 und 200 ppm bzw. zwischen 50 und 120 ppm betragen, wobei die Legierung darüber hinaus nur Zirkonium und unvermeidbare Verunreinigungen enthält.

2. Rohr nach Anspruch 1, dadurch gekennzeichnet, daß die Legierung vollständig rekristallisiert ist.

3. Rohr nach Anspruch 1, dadurch gekennzeichnet, daß die Legierung sich im vollkommen entspannten Zustand befindet.

4. Rohr nach Anspruch 1, 2 oder 3, dadurch gekennzeichnet, daß die Legierung ungefähr 1,3% Zinn, 0,60% Eisen, 0,25% Vanadium oder Chrom, 0,14 % Sauerstoff, 140 ppm Kohlenstoff und 90 ppm Silicium enthält.

5. Rohr nach einem der Ansprüche 1 bis 4, dadurch gekennzeichnet, daß das Verhältnis Fe/V in der Nähe von 2/1 ist, wobei die Legierung praktisch ohne Chrom ist.

6. Rohr nach einem der Ansprüche 1 bis 4, dadurch gekennzeichnet, daß das Verhältnis Fe/Cr in der Nähe von 2/1 ist, wobei die Legierung praktisch ohne Vanadium ist.

7. Rohr nach einem der Ansprüche 1 bis 6, dadurch gekennzeichnet, daß die Summe der Gehalte an Eisen einerseits und Vanadium oder Chrom andererseits 0,7% übersteigt.

8. Verfahren zur Herstellung eines Rohres nach einem der Patentansprüche 1 bis 7, dadurch gekennzeichnet, daß es aufeinanderfolgend aufweist: das Fließen einer Bramme und das Schmieden im Zustand des Vollstabes; Abschrecken des Stabes, der vorher in Phase β geheizt wurde; gegebenenfalls Glühen in Phase α zwischen 640° C und 760° C; Strangpressen eines durchbrochenen Preßbarrens in einen rohrförmigen Rohling; gegebenenfalls Glühen in Phase α zwischen 600° C und 750° C; aufeinanderfolgendes Kaltwalzen in der Form von Rohren mit abnehmender Dicke, mit Zwischenwärmebehandlungen in inerter Atmosphäre oder im Vakuum bei einer Temperatur zwischen 640° C und 760° C, vorteilhafterweise um bzw. gegen 730° C für die beiden ersten und 700° C für die nachfolgenden und ein End- bzw. Finalglühen in inerter Atmosphäre oder unter Vakuum.

9. Verfahren nach Anspruch 8, dadurch gekennzeichnet, daß das Finalglühen ein Entspannungsglühen zwischen 450° C und 500° C ist.

10. Verfahren nach Anspruch 8, dadurch gekennzeichnet, daß das Finalglühen ein Rekristallisationsglühen zwischen 565° C und 630° C ist.

11. Verfahren nach einem der Ansprüche 8 bis 10, dadurch gekennzeichnet, daß die Gesamtheit der Wärmebehandlungen derart ist, daß der Parameter der Wärmebehandlung ∑A zwischen 10⁻¹⁸ und 10⁻¹⁶ beträgt.

12. Verfahren nach Anspruch 8, 9 oder 10, dadurch gekennzeichnet, daß das erste Glühen um bzw. gegen 730° C durchgeführt wird.

13. Verfahren nach Anspruch 12, dadurch gekennzeichnet, daß das zweite Glühen nach dem Strangpressen um bzw. gegen 650° C durchgeführt wird.

## Claims

1. A zirconium-based alloy tube for constituting all or a portion of a cladding or guide tube for a nuclear fuel assembly, characterized in that the alloy contains, by weight, 1.0% to 1.7% of tin, 0.55% to 0.8% of iron, 0.20% to 0.60% in total of at least one element chromium and vanadium, and 0.10% to 0.18% of oxygen, the carbon and silicon contents being respectively in the range 100 parts per million (ppm) to 180 ppm and in the range 50 ppm to 120 ppm, the alloy also containing only zirconium and unavoidable impurities.

2. A tube according to claim 1, characterized in that the alloy is completely recrystallized.

3. A tube according to claim 1, characterized in that the alloy is completely self-relieved.

4. A tube according to claim 1, 2, or 3, characterized in that the alloy contains about 1.3% of tin, 0.60% of iron, 0.25% of vanadium or chromium, 0.14% of oxygen, 140 ppm of carbon and 90 ppm of silicon.

5. A tube according to any one of claims 1 to 4, characterized in that the Fe/V ratio is close to 2/1, the alloy being practically free of chromium.

6. A tube according to any one of claims 1 to 4, characterized in that the Fe/Cr ratio is close to 2/1, the alloy being practically free of vanadium.

7. A tube according to any one of claims 1 to 6, characterized in that the sum of iron content, on one hand, of the vanadium or chromium content on the other hand, exceeds 0.7%.

8. A process for producing a tube in accordance with any one of claims 1 to 7, characterized in that it comprises successively: casting an ingot and forging to a solid bar; quenching the bar heated to β phase; optionally annealing in the range 640°C to 760°C into α phase; drawing a pierced billet to a tubular blank; optionally annealing in the range 600°C to 750°C to form the α phase; successive cold rolling steps to form tubes of decreasing thicknesses, with intermediate heat treatments in an inert atmosphere or in a vacuum at a temperature in the range 640°C to 760°C, advantageously about 730°C, for the first two treatments and 700°C for subsequent treatments; and a final annealing step in an inert atmosphere or under vacuum.

9. A process according to claim 8, characterized in that the final annealing step is stress-relieving annealing in the range 450°C to 500°C.

10. A process according to claim 8, characterized in that the final annealing step is recrystallization annealing in the range 565°C to 595°C.

11. A process according to any one of claims 8 to 10, characterized in that the set of heat treatments is such that the heat treatment parameter ∑A is between 10⁻¹⁸ and 10⁻¹⁶.

12. A process according to claim 8, 9, or 10, characterized in that the first annealing step is carried out at about 730°C.

13. A process according to claim 13, characterized in that the second annealing step after drawing is carried out at about 650°C.
